# EUROPEAN PATENT SPECIFICATION

(11) **EP 3 012 103 B1**
(45) Date of publication and mention of the grant of the patent: **19.09.2018**
(21) Application number: 13887202.3
(22) Date of filing: 20.06.2013
(51) Int. Cl.: B32B 37/00, B32B 27/32

(54) **NON-WEFT CLOTH, MANUFACTURING METHOD THEREFOR, AND NON-WEFT CLOTH PRODUCT**
VLIESSTOFF, HERSTELLUNGSVERFAHREN DAFÜR UND VLIESSTOFFPRODUKT
TISSU SANS TRAME, SON PROCÉDÉ DE FABRICATION, ET PRODUIT DE TISSU SANS TRAME

(43) Date of publication of application: 27.04.2016
(73) Proprietor: Zhengzhou Zhongyuan Defense Material Co., Ltd., Zhengzhou, Henan 450001 (CN)
(72) Inventor: JI, Changgan, Zhengzhou Henan 450001 (CN); YIN, Ruiwen, Zhengzhou Henan 450001 (CN); MA, Junying, Zhengzhou Henan 450001 (CN)
(74) Representative: Cummings, Sean Patrick
(86) International application number: PCT/CN2013/077550
(87) International publication number: WO 2014/201656

(56) References cited:
- CN-A- 102 528 998
- CN-A- 102 529 241
- US-A- 5 935 678
- US-A1- 2006 210 749
- US-A1- 2006 210 749
- US-A1- 2010 003 452
- US-B1- 7 923 094
- US-B1- 7 923 094

## Description

### Field of the Invention

The invention relates to a non-woven fabric and a non-woven fabric product.

### Background of the Invention

Ultra-high molecular weight polyethylene (referred to as UHMW-PE) is a thermoplastic engineering plastic with a linear structure and excellent comprehensive performances, and one of important uses of the material is to prepare a high-strength fiber on the basis of the material.

An ultra-high molecular weight polyethylene (UHMW-PE) fiber is a synthetic fiber, its molecular structure has very high straightening parallelism and degree of orientation, and such molecular structure determines that the ultra-high molecular weight polyethylene fiber has a very high strength and modulus and has the advantages of good chemical stability, corrosion resistance and the like. The above properties of the ultra-high molecular weight polyethylene (UHMW-PE) fiber have exceeded those of an aramid fiber plain weave fabric, and the ultra-high molecular weight polyethylene fiber is widely applied in the field of bulletproof protection for military and polices and has become a mainstream material replacing a traditional steel structure bulletproof material in the field.

The strength of a unidirectional cloth (also known as UD cloth) is centralized in a certain direction. A non-woven fabric can be prepared by laminating multiple unidirectional cloths at certain fiber axis rotation angles. At present, the non-woven fabric prepared from ultra-high molecular weight polyethylene fibers is generally prepared by adopting the following process: tidily arranging multiple ultra-high molecular weight polyethylene fibers by a warping process of realizing uniformity, parallelism, straightness and the like, bonding the fibers with glue to prepare the unidirectional cloth, sequentially crisscross spreading at least two layers of the multi-layer unidirectional cloth according to 0 degree or 90 degrees and bonding the unidirectional cloths with the glue to prepare the non-woven fabric.

The existing process uses a large amount of glue, the process for bonding the glue with the ultra-high molecular weight polyethylene fibers is complex, and the production efficiency of the unidirectional cloth is further reduced. In addition, as each ultra-high molecular weight polyethylene fiber has a tow-like structure and each ultra-high molecular weight polyethylene fiber is an independent individual, the warping process of the fibers is complex, the production cost is high, the fibers are liable to production of breaking, distortion, intertwining, knotting, non-uniform arrangement and other defects in warping, coating and other process flows, these defects will hinder the effective energy transfer of external force by the non-woven fabric, and the strength, the bulletproof performance and other performances of the non-woven fabric are further reduced.

US 2006/210749 A1 discloses a product former by sequentially criss-cross compounding at certain angles and laminating multiple unidirectionally oriented polyethylene monolayers formed from aligned unidirectional ultra-high molecular weight polyethylene strips into a whole.

US 7923094 B1 discloses a non-woven ballistic material fabricated by angular lamination of a plurality of wide sheets of UHMWPE, wherein the wide sheets comprise a plurality of strips partially overlapped.

US 2010/003452 A1 discloses a stack comprising first and second layers, whereby the first layers comprise UHMWPE fibres and the second layers comprise UHMWPE tapes.

### Summary of the Invention

A brief summary of the invention is given below to facilitate the basic understanding of some aspects of the invention. It should be understood that the summary is not an exhaustive summary of the invention. It is not intended to determine key or important parts of the invention or limit the scope of the invention. It only aims at presenting some concepts in a simplified form as a prelude to the more detailed description which will be discussed later.

The invention provides a non-woven fabric with low cost and improved fabric strength, a preparation method thereof and a non-woven fabric product.

In the first aspect, the invention provides a preparation method of a non-woven fabric, comprising:
crisscross compounding and laminating multiple ultra-high molecular weight polyethylene thin films at certain angles into a whole to obtain the non-woven fabric.

Optionally, crisscross compounding and laminating the multiple ultra-high molecular weight polyethylene thin films at the certain angles into the whole comprises: crisscross laminating and spreading the ultra-high molecular weight polyethylene thin films at certain angles and hot-pressing or bonding overlapped parts of the multiple ultra-high molecular weight polyethylene thin films.

Optionally, the intersection angles of any two adjacent ultra-high molecular weight polyethylene thin films are the same.

Optionally, the intersection angles are 0-90 degrees.

Optionally, the intersection angles are 45 degrees or 90 degrees.

Optionally, the intersection angles of at least two ultra-high molecular weight polyethylene thin films of the ultra-high molecular weight polyethylene thin films are different from the intersection angles of other ultra-high molecular weight polyethylene thin films.

Optionally, the intersection angles of every two adjacent ultra-high molecular weight polyethylene thin films from the first ultra-high molecular weight polyethylene thin film to the last ultra-high molecular weight polyethylene thin film gradually increase. Optionally, the related parameters of the ultra-high molecular weight polyethylene thin film at least meet one or more of the following conditions:
the linear density is above 5000 deniers;
the width is above 100 mm;
the thickness is below 0.2 mm;
the breaking strength is above 10 grams/denier;
the tensile modulus is above 800 grams/denier; and
the elongation at break is below 6%.

In the second aspect, the invention further provides a non-woven fabric which is prepared by adopting the above preparation method.

In the third aspect, the invention further provides a non-woven fabric product which is prepared from the above non-woven fabric.

In the embodiment, the ultra-high molecular weight polyethylene thin film is a thin slice which is prepared from ultra-high molecular weight polyethylene and has a certain width and thickness, wherein the width is much greater than the thickness, and it has an integral structure without integration points or trim lines.

In the embodiment of the invention, the non-woven fabric is prepared on the basis of the ultra-high molecular weight polyethylene thin films, so that a trivial process for warping treatment of the fibers respectively can be eliminated, the amount of the glue is also obviously reduced, the preparation process of the non-woven fabric is simplified, the production cost is reduced and the production efficiency is improved. In addition, as macromolecular straight chain structures in the ultra-high molecular weight polyethylene thin films are uniformly distributed, the probability of causing damages to the interior of the thin films in the preparation process of the non-woven fabric is relatively low, the defects of breaking, distortion, intertwining, knotting, non-uniform arrangement and the like can be avoided, and when the non-woven fabric prepared on the basis of the ultra-high molecular weight polyethylene thin films is subject to external force impact, the ultra-high molecular weight polyethylene thin films are stressed as a whole, and force-bearing points can be diffused to force-bearing surfaces rapidly to effectively transfer energy, thereby improving the strength of the non-woven fabric and improving the bulletproof performance and other protection performances thereof.

These and other advantages of the invention will be evident through the following detailed description of optional embodiments of the invention in conjunction with the accompanying drawings.

### Brief Description of the Drawings

The invention can be better understood through the following description in conjunction with the accompanying drawings, wherein the same or similar reference symbols are used throughout the drawings to represent the same or similar parts. The accompanying drawings in conjunction with the detailed description below are included in the description and form one part of the specification, and are used for further illustrating the optional embodiments of the invention and explaining the principle and the advantages of the invention. In the drawings:
Fig. 1 is a flow diagram of an embodiment of a preparation method of a non-woven fabric provided by the invention.
Fig. 2 is a structural schematic diagram of a first embodiment of a non-woven fabric provided by the invention.
Fig. 3 is a structural schematic diagram of a second embodiment of the non-woven fabric provided by the invention.
Fig. 4 is a structural schematic diagram of a fourth embodiment of the non-woven fabric provided by the invention.

Those of skilled in the art should understand that elements in the accompanying drawings are only illustrated for simplicity and clarity, and are not necessarily drawn to scale. For example, the sizes of some elements in the accompanying drawings may be exaggerated relative to other elements so as to assist in improvement of the understanding of the embodiments of the invention.

### Detailed Description of the Embodiments

The exemplary embodiments of the invention will be described in detail below in conjunction with the accompanying drawings. For clarity and brevity, not all the characteristics of the actual implementation ways are described in the description. However, it should be understood that, in the process of developing any of these actual embodiments, many decisions which are specific to the implementation ways must be made to facilitate the implementation of specific objectives of development persons, such as meeting those system and business related limitation conditions, and these limitation conditions may vary between the different implementation ways. In addition, it should also be understood that, although the development work may be very complex and time-consuming, the development work is just a routine task for those skilled in the art and benefiting from the disclosure of the invention.

Herein, it still needs to be noted that, in order to prevent the unnecessary details from obscuring the invention, only the device structure and/or the treatment steps which are closely related to the solutions of the invention are described in the accompanying drawings and the description, and the representations and the descriptions of the parts and the treatments which are not closely related to the invention and known to those of ordinary skill in the art are omitted.

The technical solutions provided by various embodiments of the invention are essentially different from the traditional technologies of ultra-high molecular weight polyethylene application and are revolutionary innovations against the traditional technologies, namely the ultra-high molecular weight polyethylene thin films are used for replacing the ultra-high molecular weight fibers to develop and prepare the non-woven fabric, and the core concept mainly comprises: the ultra-high molecular weight polyethylene thin films are used for replacing the traditional ultra-high molecular weight polyethylene fibers to prepare the non-woven fabric.

In this case, the ultra-high molecular weight polyethylene thin film is a thin slice which is prepared from ultra-high molecular weight polyethylene and has a certain width and thickness, wherein the width is much greater than the thickness.

The ultra-high molecular weight polyethylene thin films provided by the invention are different from the ultra-high molecular weight polyethylene fibers and also different from a plane formed by bonding the multiple ultra-high molecular weight polyethylene fibers, and the significant difference is that: the ultra-high molecular weight polyethylene thin film provided by the invention has a certain width and thickness and has an integral structure without integration points or trim lines.

The non-woven fabric provided in each embodiment of the invention is prepared on the basis of the ultra-high molecular weight polyethylene thin films. In the preparation process, a complex process for respectively arranging multiple fiber silks is eliminated, the probability of producing burrs on the surfaces of the thin films or strips is obviously reduced and the probability of breaking, distortion, intertwining and other phenomena in the thin films is also obviously reduced. When bearing a load, the ultra-high molecular weight polyethylene thin films are stressed as a whole, so that the strength of the non-woven fabric is relatively high and the strength utilization ratio is effectively improved. Thus, the strength of the non-woven fabric prepared on the basis of the ultra-high molecular weight polyethylene thin films is higher than that of a product prepared by adopting the ultra-high molecular weight polyethylene fibers with the same denier number, the cost of the former is obviously lower than the latter, and the non-woven fabric has the advantages of good structural integrity, high strength, high strength utilization ratio, high production efficiency, low processing cost, light weight, small surface density, good flexibility and the like.

The technical solutions of the invention are further described by taking the optional structures of the rope and the preparation method thereof as examples below in conjunction with the accompanying drawings.

### Embodiment 1

The embodiment provides a preparation method of a non-woven fabric, comprising: step S101, sequentially crisscross compounding multiple ultra-high molecular weight polyethylene thin films; and
step S102, laminating the multiple ultra-high molecular weight polyethylene thin films which are crisscross compounded into a whole to obtain the non-woven fabric. The core concept of the embodiment is that, the ultra-high molecular weight polyethylene thin films are used for directly replacing traditional ultra-high molecular weight polyethylene fibers to prepare the non-woven fabric.

The ultra-high molecular weight polyethylene thin films described in the various embodiments of the invention adopt polyethylene with molecular weight of above 1 million.

In the embodiment, the ultra-high molecular weight polyethylene thin film is a thin slice which is prepared from ultra-high molecular weight polyethylene and has a certain width and thickness, wherein the width is much greater than the thickness, and the ultra-high molecular weight polyethylene thin film has an integral structure without integration points or trim lines.

The ultra-high molecular weight polyethylene thin films provided by the embodiment replace unidirectional cloth prepared from the ultra-high molecular weight polyethylene fibers by a traditional process, so that a trivial process for warping treatment of the various fibers can be eliminated, the amount of the glue is also obviously reduced, the preparation process of the non-woven fabric is simplified, the production cost is reduced and the production efficiency is improved.

The multiple ultra-high molecular weight polyethylene thin films are crisscross laminated and spread at the certain angles and overlapped parts of the multiple ultra-high molecular weight polyethylene thin films are hot-pressed or bonded.

By adopting the bonding way, one surface of each ultra-high molecular weight polyethylene thin film is coated with an adhesive, the other surface of each ultra-high molecular weight polyethylene thin film is not coated with the adhesive, and one surface coated with the adhesive of one ultra-high molecular weight polyethylene thin film is bonded with the surface which is not coated with the adhesive of another ultra-high molecular weight polyethylene thin film.

By adopting the hot-pressing way, the control conditions for hot-pressing are as follows: the temperature is 50-130°C and/or the pressure is 1-15MPa; by adopting the hot-pressing way, the coating of the adhesive is not required, thereby being conductive to simplifying the process, reducing the cost and improving the production efficiency; and furthermore, as the hot-pressing temperature is lower than a melting point of the ultra-high molecular weight polyethylene thin films or strips, damages can be avoided.

Optionally, the intersection angles of any two adjacent ultra-high molecular weight polyethylene thin films are the same, and the intersection angles are 0-90degrees. Further, the intersection angles are 45 degrees or 90 degrees.

Optionally, the intersection angles of at least two layers of the ultra-high molecular weight polyethylene thin films are different from the intersection angles of other ultra-high molecular weight polyethylene thin films.

Further, the intersection angles of every two adjacent ultra-high molecular weight polyethylene thin films from the first ultra-high molecular weight polyethylene thin film to the last ultra-high molecular weight polyethylene thin film gradually increase, and the non-woven fabric prepared by adopting the way can be applied to, but is not limited to manufacturing of bulletproof helmets.

The formed non-woven fabric can be formed by compounding two layers, or compounding four layers or compounding eight layers.

Optionally, the related parameters of the ultra-high molecular weight polyethylene thin film provided in each embodiment of the invention at least meet one or more of the following conditions:
the linear density is above 5000 deniers;
the width is above 100 mm;
the thickness is below 0.2 mm;
the breaking strength is above 10 grams/denier;
the tensile modulus is above 800 grams/denier; and
the elongation at break is below 6%.

According to the preparation method of the non-woven fabric provided by the embodiment, the ultra-high molecular weight polyethylene thin films are adopted to prepare the non-woven fabric, so that a trivial process for warping treatment of the various fibers can be eliminated, the amount of the glue is also obviously reduced, the preparation process of the non-woven fabric is further simplified, the process is simple, the production cost is low, and the prepared non-woven fabric can be applied to the fields of national defense military, individual protection and civil use, such as bulletproof floors of helicopters, armored seats, reinforced cabinet doors, armored protection plates of tanks and ships, anti-scrap liners, synthetic anti-ballistic armors of tracked vehicles, tactical vehicles and commercial armored vehicles, housings of bulletproof cash carrying vehicles and armored weapons, protective housing covers of radars, bulletproof vests, bulletproof insert plates, helmets, bulletproof and puncture-proof clothes, bulletproof and explosion-proof suitcases and other high-strength composite materials, such as high-strength suitcases, crashproof poles for automobiles and the like.

### Embodiment 2

The embodiment provides a non-woven fabric which is formed by crisscross compounding and laminating multiple ultra-high molecular weight polyethylene thin films at certain angles wherein the intersection angles of any two adjacent ultra-high molecular weight polyethylene thin films are the same.

Further, the intersection angles are 0-90 degrees.

Further, the intersection angles are 45 degrees or 90 degrees.

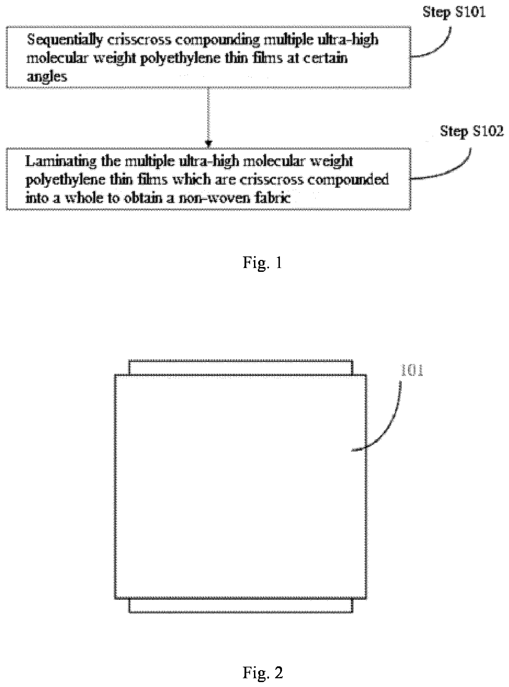

As an optional implementation way, as shown in Fig. 2, the multiple ultra-high molecular weight polyethylene thin films 101 are compounded and laminated to form the non-woven fabric, and the intersection angles of every two adjacent ultra-high molecular weight polyethylene thin films 101 are 90 degrees.

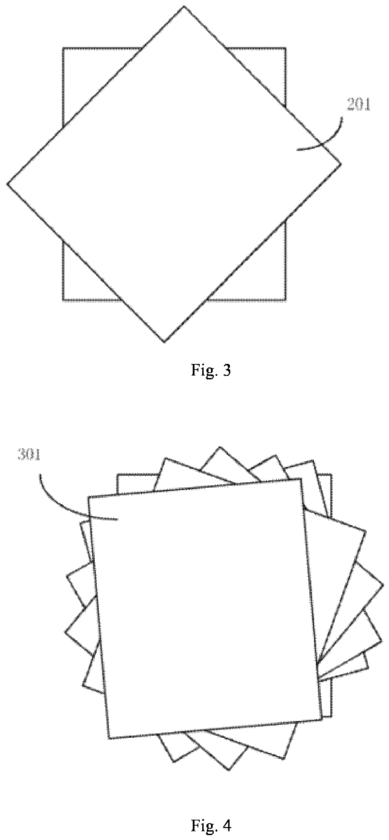

As an optional implementation way, as shown in Fig. 3, the multiple ultra-high molecular weight polyethylene thin films 201 are compounded and laminated to form the non-woven fabric, and the intersection angles of every two adjacent ultra-high molecular weight polyethylene thin films 201 are 45 degrees.

Overlapped parts of the two adjacent ultra-high molecular weight polyethylene thin films are connected in a bonding or hot-pressing way; in the bonding way, one surface of each ultra-high molecular weight polyethylene thin film is coated with glue, the other surface is not coated with the glue, and one surface coated with the glue of one ultra-high molecular weight polyethylene thin film is bonded with the surface which is not coated with the glue of another ultra-high molecular weight polyethylene thin film; and in the hot-pressing way, the control conditions for hot pressing are as follows: the temperature is 50-130°C and/or the pressure is 1-15MPa.

As macromolecular straight chain structures in the ultra-high molecular weight polyethylene thin films are uniformly distributed, the probability of causing damages to the interior of the thin films in the preparation process of the non-woven fabric is relatively low, the defects of breaking, distortion, intertwining, knotting, non-uniform arrangement and the like can be avoided, and when the non-woven fabric prepared on the basis of the ultra-high molecular weight polyethylene thin films is subject to external force impact, the ultra-high molecular weight polyethylene thin films are stressed as a whole, and force-bearing points can be diffused to force-bearing surfaces rapidly to effectively transfer energy, thereby improving the strength of the non-woven fabric and improving the bulletproof performance and other protection performances thereof.

The non-woven fabric provided by the embodiment is formed by compounding the ultra-high molecular weight polyethylene thin films, so that a trivial process for warping treatment of the various fibers can be eliminated, the amount of the glue is also obviously reduced, the preparation process of the non-woven fabric is further simplified, the process is simple, and the production cost is low; and when the non-woven fabric is subject to external force impact, the ultra-high molecular weight polyethylene thin films are stressed as a whole, and force-bearing points can be diffused to force-bearing surfaces rapidly to effectively transfer energy, so that the non-woven fabric has the advantages of a high strength, great modulus, small creep property, a relatively small stress concentration influence scope along the edge direction of the thin films and the like and can be widely applied to the fields of national defense military, individual protection and civil use, such as bulletproof floors of helicopters, armored seats, reinforced cabinet doors, armored protection plates of tanks and ships, anti-scrap liners, synthetic anti-ballistic armors of tracked vehicles, tactical vehicles and commercial armored vehicles, housings of bulletproof cash carrying vehicles and armored weapons, protective housing covers of radars, bulletproof vests, bulletproof insert plates, helmets, bulletproof and puncture-proof clothes, bulletproof and explosion-proof suitcases and other high-strength composite materials, such as high-strength suitcases, crashproof poles for automobiles and the like.

### Embodiment 3

The embodiment provides a non-woven fabric which is formed by crisscross compounding and laminating multiple ultra-high molecular weight polyethylene thin films at certain angles. The intersection angles of at least two ultra-high molecular weight polyethylene thin films of the ultra-high molecular weight polyethylene thin films are different from the intersection angles of other ultra-high molecular weight polyethylene thin films.

As shown in Fig. 4, the multiple ultra-high molecular weight polyethylene thin films 301 are compounded and laminated to form the non-woven fabric, the intersection angles of every two adjacent ultra-high molecular weight polyethylene thin films from the first ultra-high molecular weight polyethylene thin film to the last ultra-high molecular weight polyethylene thin film gradually increase, and the non-woven fabric prepared by adopting the way is mainly applied to manufacturing of helmets.

The helmet prepared from the non-woven fabric provided in the embodiment has high strength and excellent bulletproof performance.

Overlapped parts of the two adjacent ultra-high molecular weight polyethylene thin films are connected by adopting a bonding or hot-pressing way; by adopting the bonding way, one surface of each ultra-high molecular weight polyethylene thin film is coated with glue, the other surface is not coated with the glue, and one surface coated with the glue of one ultra-high molecular weight polyethylene thin film is bonded with the surface which is not coated with the glue of another ultra-high molecular weight polyethylene thin film; and by adopting the hot-pressing way, the control conditions for hot pressing are as follows: the temperature is 50-130°C and/or the pressure is 1-15MPa.

### Embodiment 4

The embodiment provides a non-woven fabric product which is prepared from a non-woven fabric, and the non-woven fabric is formed by crisscross compounding and laminating multiple ultra-high molecular weight polyethylene thin films at certain angles.

The non-woven fabric product provided by the embodiment can be used for, but is not limited to bulletproof floors of helicopters, armored seats, reinforced cabinet doors, armored protection plates of tanks and ships, anti-scrap liners, synthetic anti-ballistic armors of tracked vehicles, tactical vehicles and commercial armored vehicles, housings of bulletproof cash carrying vehicles and armored weapons, protective housing covers of radars, bulletproof vests, bulletproof insert plates, helmets, bulletproof and puncture-proof clothes, bulletproof and explosion-proof suitcases and other high-strength composite materials, such as high-strength suitcases, crashproof poles for automobiles and the like.

As for the non-woven fabric product provided by the embodiment, as the non-woven fabric is prepared from the ultra-high molecular weight polyethylene thin films, when being subject to external force impact, the ultra-high molecular weight polyethylene thin films or strips are stressed as a whole, and force-bearing points can be diffused to force-bearing surfaces rapidly to effectively transfer energy. Thus, the non-woven fabric product prepared from the non-woven fabric has higher strength and better bulletproof performance.

Although the invention and the advantages thereof have been described in detail, it should be understood that various changes, substitutions and modifications can be made without exceeding the scope of the invention limited by the appended claims.

Finally, it need to be noted that, the relation terms, such as first, second and the like herein are only used to differentiate one entity or operation from another entity or operation, and do not necessarily require or imply that these entities or operations have any actual relation or sequence. Furthermore, terms "including", "comprising" or any other variations thereof are intended to cover non-exclusive inclusion, so that the process, method, the object or the equipment including a series of elements comprises not only those elements, but also other elements which are not listed clearly, or further comprise the inherent elements of the process, the method, the object or the equipment. Without more limitations, the element limited by the wording "including one..." does not exclude that the process, the method, the object or the equipment including the element further has other identical elements.

Although the embodiments of the invention have been described in detail in conjunction with the accompanying drawings, it should be understood that the implementation ways described above are only used for describing the invention rather than limiting the invention. For those skilled in the art, various modifications and changes can be made to the above implementation ways without deviating from the scope of the invention. Thus, the scope of the invention is only limited by the appended claims and equivalents thereof.

## Claims

1. A non-woven fabric, **characterized in that** the non-woven fabric is formed by sequentially crisscross compounding (SI01) at certain angles and laminating (SI02) multiple ultra-high molecular weight polyethylene thin films (101, 201, 301) into a whole, wherein the ultra-high molecular weight polyethylene film (101, 201, 301) has a certain width and thickness and has an integral structure without integration points or trim lines.

2. The non-woven fabric according to claim 1, wherein the parameters of the ultra-high molecular weight polyethylene thin film (101, 201, 301) meet at least one or more of the following conditions:
the breaking strength is above 10 grams/denier;
the tensile modulus is above 800 grams/denier; and
the elongation at break is below 6%.

3. The non-woven fabric according to claim 2, wherein the parameters of the ultra-high molecular weight polyethylene thin film (101, 201, 301) meet at least one or more of the following conditions:
the linear density is above 5000 deniers;
the width is above 100 mm; and
the thickness is below 0.2 mm.

4. The non-woven fabric according to any of claims 1 to 3, wherein the non-woven fabric is formed by sequentially crisscross laminating and spreading multiple ultra-high molecular weight polyethylene thin films (101, 201, 301) at certain angles and hot-pressing or cementing overlapped parts of the multiple ultra-high molecular weight polyethylene thin films.

5. The non-woven fabric according to any of claims 1 to 3, wherein the intersection angles of any two adjacent ultra-high molecular weight polyethylene thin films (101, 201, 301) are the same.

6. The non-woven fabric according to claim 5, wherein the intersection angles are 0-90 degrees.

7. The non-woven fabric according to claim 6, wherein the intersection angles are 45 degrees or 90 degrees.

8. The non-woven fabric according to any of claims 1 to 3, wherein at least one intersection angles between two adjacent ultra-high molecular weight polyethylene thin films (101, 201, 301) of the ultra-high molecular weight polyethylene thin films is different from the intersection angles of other ultra-high molecular weight polyethylene thin films.

9. The non-woven fabric according to claim 8, wherein the intersection angles of any two adjacent ultra-high molecular weight polyethylene thin films (101, 201, 301) are gradually increasing from the first ultra-high molecular weight polyethylene thin film to the last ultra-high molecular weight polyethylene thin film.

10. A non-woven fabric product, **characterized in that** the product is prepared from the non-woven fabric according to any of claims 1 to 9.

## Patentansprüche

1. Vliesstoff, **dadurch gekennzeichnet, dass** der Vliesstoff durch ein sequenzielles kreuzweises Compoundieren (SI01) in bestimmten Winkeln und ein Laminieren (SI02) von mehreren dünnen Polyethylenfolien (101, 201, 301) mit ultrahohem Molekulargewicht zu einem Ganzen gebildet wird, wobei die Polyethylenfolie (101, 201, 301) mit ultrahohem Molekulargewicht eine bestimmte Breite und Dicke und eine integrale Struktur ohne Integrationspunkte oder Stutzlinien aufweist.

2. Vliesstoff nach Anspruch 1, wobei die Parameter der dünnen Polyethylenfolie (101, 201, 301) mit ultrahohem Molekulargewicht mindestens eine oder mehrere der folgenden Bedingungen erfüllen:
die Reißstärke liegt über 10 Gramm/Denier;
das Zugmodul liegt über 800 Gramm/Denier; und
die Reißdehnung liegt unter 6 %.

3. Vliesstoff nach Anspruch 2, wobei die Parameter der dünnen Polyethylenfolie (101, 201, 301) mit ultrahohem Molekulargewicht mindestens eine oder mehrere der folgenden Bedingungen erfüllen:
die lineare Dichte liegt über 5.000 Denier;
die Breite liegt über 100 mm; und
die Dicke liegt unter 0,2 mm.

4. Vliesstoff nach einem der Ansprüche 1 bis 3, wobei der Vliesstoff durch ein sequenzielles kreuzweises Laminieren und Verbreitern mehrerer dünner Polyethylenfolien (101, 201, 301) mit ultrahohem Molekulargewicht in bestimmten Winkeln und ein Heißpressen oder ein Zementieren von sich überlappenden Bereichen der dünnen Polyethylenfolien mit ultrahohem Molekulargewicht gebildet wird.

5. Vliesstoff nach einem der Ansprüche 1 bis 3, wobei die Schnittwinkel von jeglichen zwei benachbarten dünnen Polyethylenfolien (101, 201, 301) mit ultrahohem Molekulargewicht gleich sind.

6. Vliesstoff nach Anspruch 5, wobei die Schnittwinkel 0-90 Grad betragen.

7. Vliesstoff nach Anspruch 6, wobei die Schnittwinkel 45 Grad oder 90 Grad betragen.

8. Vliesstoff nach einem der Ansprüche 1 bis 3, wobei mindestens ein Schnittwinkel zwischen zwei benachbarten dünnen Polyethylenfolien (101, 201, 301) mit ultrahohem Molekulargewicht von den dünnen Polyethylenfolien mit ultrahohem Molekulargewicht sich von den Schnittwinkeln der anderen dünnen Polyethylenfolien mit ultrahohem Molekulargewicht unterscheidet.

9. Vliesstoff nach Anspruch 8, wobei die Schnittwinkel von jeglichen beiden benachbarten dünnen Polyethylenfolien (101, 201, 301) mit ultrahohem Molekulargewicht sich schrittweise von der ersten dünnen Polyethylenfolie mit ultrahohem Molekulargewicht bis zu der letzten dünnen Polyethylenfolie mit ultrahohem Molekulargewicht erhöhen.

10. Vliesstoffprodukt, **dadurch gekennzeichnet, dass** das Produkt aus dem Vliesstoff nach einem der Ansprüche 1 bis 9 hergestellt ist.

## Revendications

1. Tissu non tissé, **caractérisé en ce que** le tissu non tissé est formé par une composition séquentielle croisée (SI01) à certains angles et une stratification (SI02) de plusieurs couches minces de polyéthylène de masse moléculaire ultra élevée (101, 201, 301) en un ensemble, dans lequel la couche de polyéthylène de masse moléculaire ultra élevée (101, 201, 301) a une certaine largeur et épaisseur et a une structure intégrale sans point d'intégration ou ligne de garniture.

2. Tissu non tissé selon la revendication 1, dans lequel les paramètres de la couche mince de polyéthylène de masse moléculaire ultra élevée (101, 201, 301) remplissent au moins une ou plusieurs des conditions suivantes :
la résistance à la rupture est supérieure à 10 grammes/denier ;
le module de traction est supérieur à 800 grammes/denier ; et
l'allongement à la rupture est inférieur à 6 %.

3. Tissu non tissé selon la revendication 2, dans lequel les paramètres de la couche mince de polyéthylène de masse moléculaire ultra élevée (101, 201, 301) remplissent au moins une ou plusieurs des conditions suivantes :
la densité linéaire est supérieure à 5000 deniers ;
la largeur est supérieure à 100 mm ; et
l'épaisseur est inférieure à 0,2 mm.

4. Tissu non tissé selon l'une quelconque des revendications 1 à 3, dans lequel le tissu non tissé est formé par une stratification séquentielle croisée et un étalement de plusieurs couches minces de polyéthylène de masse moléculaire ultra élevée (101, 201, 301) à certains angles et un pressage à chaud ou une cimentation de parties chevauchées des plusieurs couches minces de polyéthylène de masse moléculaire ultra élevée.

5. Tissu non tissé selon l'une quelconque des revendications 1 à 3, dans lequel les angles d'intersection de deux quelconques couches minces de polyéthylène de masse moléculaire ultra élevée adjacentes (101, 201, 301) sont les mêmes.

6. Tissu non tissé selon la revendication 5, dans lequel les angles d'intersection sont de 0 à 90 degrés.

7. Tissu non tissé selon la revendication 6, dans lequel les angles d'intersection sont de 45 degrés ou de 90 degrés.

8. Tissu non tissé selon l'une quelconque des revendications 1 à 3, dans lequel au moins un angle d'intersection entre deux couches minces de polyéthylène de masse moléculaire ultra élevée adjacentes (101, 201, 301) des couches minces de polyéthylène de masse moléculaire ultra élevée est différent des angles d'intersection d'autres couches minces de polyéthylène de masse moléculaire ultra élevée.

9. Tissu non tissé selon la revendication 8, dans lequel les angles d'intersection de deux quelconques couches minces de polyéthylène de masse moléculaire ultra élevée adjacentes (101, 201, 301) augmentent progressivement de la première couche mince de polyéthylène de masse moléculaire ultra élevée à la dernière couche mince de polyéthylène de masse moléculaire ultra élevée.

10. Produit en tissu non tissé, **caractérisé en ce que** le produit est préparé à partir du tissu non tissé selon l'une quelconque des revendications 1 à 9.
